# EUROPÄISCHE PATENTSCHRIFT

(11) **EP 1 112 660 B1**
(45) Veröffentlichungstag und Bekanntmachung des Hinweises auf die Patenterteilung: **07.08.2002**
(21) Anmeldenummer: 99953683.2
(22) Anmeldetag: 01.09.1999
(51) Int. Cl.: H04N 7/24

(54) **VERFAHREN ZUR EINBINDUNG VON AUDIOVISUELLER CODIERTER INFORMATION IN EINEN VORGEGEBENEN ÜBERTRAGUNGSSTANDARD SOWIE ENDGERÄTE HIERZU**
METHOD AND TERMINAL EQUIPMENT FOR INTEGRATING AUDIOVISUAL CODED INFORMATION INTO A FRAME STRUCTURED TRANSMISSION STANDARD
PROCEDE ET TERMINAUX POUR INTEGRER UNE INFORMATION AUDIOVISUELLE CODEE A UNE NORME DE TRANSMISSION A TRAME STRUCTUREE

(30) Priorität: 07.09.1998 DE 19840500; 01.10.1998 DE 19845193
(43) Veröffentlichungstag der Anmeldung: 04.07.2001
(73) Patentinhaber: ROBERT BOSCH GMBH, 70442 Stuttgart (DE)
(72) Erfinder: MOELLER, Henning, D-31683 Obernkirchen (DE); VOGEL, Peter, D-31139 Hildesheim (DE); VOLLMER, Jens, D-30159 Hannover (DE); SOELCH, Björn, D-31141 Hildesheim (DE); BAUER, Sven, D-31134 Hildesheim (DE)
(86) Internationale Anmeldenummer: DE9902770
(87) Internationale Veröffentlichungsnummer: WO0014966

(56) Entgegenhaltungen:
- EP-A- 0 905 976
- WO-A-98/21846
- LINDBERGH D: "THE H.324 MULTIMEDIA COMMUNICATION STANDARD" IEEE COMMUNICATIONS MAGAZINE,US,IEEE SERVICE CENTER. PISCATAWAY, N.J, Bd. 34, Nr. 12, 1. Dezember 1996 (1996-12-01), Seiten 46-51, XP000636453 ISSN: 0163-6804
- Information Technology - Generic Coding of Audio-Visual Objects Part 1: Systems (Passage) ISO/IEC 14496-1 Final Committee Draft of International Standard, 18 May, 1998 XP002129941
- WATANABE E ET AL: "MPEG 4 TECHNOLOGY FOR MOBILE MULTIMEDIA COMMUNICATIONS" TOSHIBA REVIEW,JP,TOKYO, Bd. 53, Nr. 4, 1998, Seiten 41-44, XP000866040 ISSN: 0303-416X

## Beschreibung

### Stand der Technik

Für die Übertragung von Bild- und Tondaten niedriger Bitraten für Multimedia Kommunikation wird mittels der ITU-H.324 Spezifikation "Terminal for low bitrate multimedia commmunication" ein System spezifiziert, das für Bildtelefonie-Anwendungen geeignet ist.

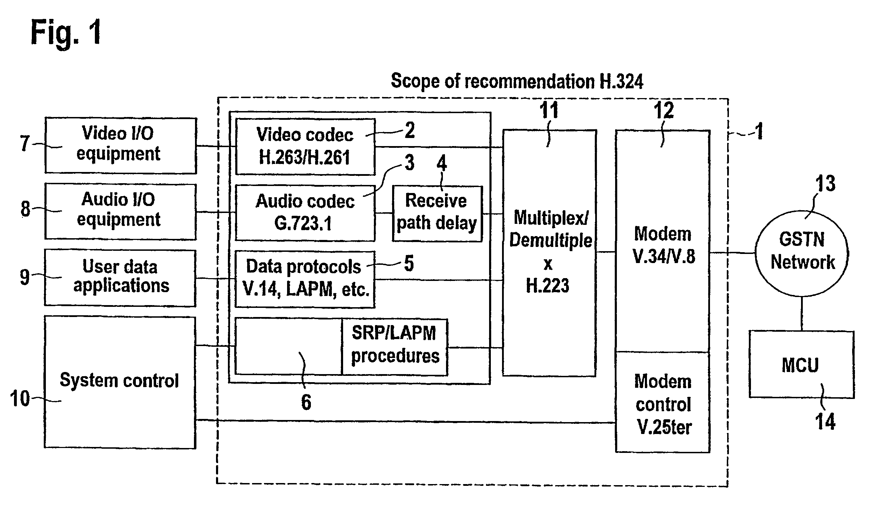

Figur 1 zeigt ein Blockschaltbild eines solchen Multimedia Systems gemäß dem Standard H.324. In dem mit Bezugszeichen 1 gekennzeichneten Block sind die Baugruppen, die in H.324 näher spezifiziert sind, untergebracht. Der Video-Codec 2 ist gemäß dem Verfahren nach ITU-H.263/H.261 ausgebildet. Dem Audio-Codec 3 gemäß ITU G.723 ist eine Verzögerungseinrichtung 4 nachgeschaltet, um evtl. zeitliche Unterschiede zwischen der Bildcodierung und Toncodierung auszugleichen. Die Einrichtung 5 dient zur Verarbeitung von Datenprotokollen, z. B. V.14 LAPM usw., und die Einrichtung 6 verarbeitet Steuerprotokolle gemäß ITU H.245. Den Codecs 2 und 3 werden über entsprechende I/O (Input/Output)-Einrichtungen 7 und 8 audiovisuelle Daten angeliefert. Die Einrichtungen zur Verarbeitung von Protokollen 5 und 6 erhalten über die Einrichtungen 9 (User Data Applications) und 10 (System Control) ihrer Eingangsdaten. Die Datenströme der Codecs 2, 3 sowie der Protokollverarbeitungseinrichtungen 5 und 6 werden über die Multiplex-/Demultiplex-Einrichtung 11 nach dem H.223 Standard zusammengeführt. Das nachgeschaltete Modem 12 liefert für die zusammengefaßten Datenströme V.34 konforme Daten und für die System-Control-Daten V.25 konforme Daten. Das Übertragungsnetz 13 schließt sich an den Block 1 an mit zugehöriger Netzsteuerung 14.

Aus der WO98/21 ist es bekannt, eine Vielzahl von gleichartigen audiovisuellen Datenstromen in einen gemeinsamen Zwischendatenstrom zu multiplexen. Für die Zwischendatenströme werden Maßnahmen zur Fehlererkennung getroffen über eine entsprechende Signalisierung in einer Initialisierungsphase. Die Zwischendatenströme werden zu einem Gesamtdatenstrom gruppiert.

Aus Lindbergh D: "The H.324 Multimedia Communication Standard" IEEE Communications Magazine, US, IEEE Service Center, Piscataway, N. J., Bd. 34, Nr. 12, 1. Dezember 1996 (1996-12-01), Seiten 46 - 51 ist es ebenfalls bekannt, Datenstrome zusammenzufassen. Durch Ausnutzung von Datenpaketen konstanter Länge in der Rahmenstruktur wird die Fehlerrobustheit erhöht. Die Aufsynchronisation in den Datenstrom nach einem Fehler ist einfach möglich. Eine Kapselung oder auch eine Zusammenführung unterschiedlicher System ist einfach durchführbar.

Aus Information Technology - Generic Coding of Audiovisual Objects Part 1: System (Passage) ISO/IEC 14496-1 Final Commitee Draft of International Standard, 18 May, 1998, ist eine ähnliche Signalzusammenfassung bekannt.

Vorteile der Erfindung

Das Verfahren gemäss den Merkmalen des Anspruchs 1 sowie der Unteransprüche ist geeignet, objektbasiert codierte Information, insbesondere nach dem MPEG-4 Übertragungsstandard, in einen vorgegebenen rahmenstrukturierten Übertragungsstandard, insbesonder in einen ITU-Standard, einzubinden und ermöglicht so den Transport der codierten MPEG-4 Daten. Gegenüber herkömmlichen Video-Codierverfahren, wie dem eingangs vorgestellten Videoverfahren gemäss ITU-H.263/H.261 und dem Audio-Codec gemäss G.723.1 ergeben sich insbesondere die folgenden Vorteile:
- objektbasierte Kodierung synthetischer und natürlicher visueller Objekte sowie Audio-Objekte,
- verbesserte Kodiereffizienz,
- verbesserte visuelle Fehlerrobustheit der Video-Kodierung,
- eigenes Format zur Beschreibung der Anordnung audiovisueller Objekte,
- Synchronisation unterschiedlicher audiovisueller Objekte,
- Interaktion mit audiovisuellen Objekten.

Dem erfindungsgemäßen Verfahren liegen zwei unterschiedliche Konzepte - im folgenden als Konzept A und B gekennzeichnet - zugrunde. Generell ist jedes der Konzepte für sich allein geeignet, die gewünschte Funktionalität - Übertragung objekt-basiert codierter audio-visueller Information - sicherzustellen, jedoch kann Konzept A bei großer Objektanzahl (d.h. einer großen Anzahl von MPEG-4 Datenströmen) vorteilhaft sein. Auch eine Kombination der beiden Konzepte ist möglich.

Das erfindungsgemäße Verfahren besitzt daher den großen Vorteil, daß
- alle MPEG-4 Datenströme - beispielsweise bei Verwendung einer großen Anzahl von Objekten - mittels der MPEG-4 FlexMux-Spezifikation zu einem Datenstrom paketiert werden können, der alle Informationen zum Decodieren enthält (**Konzept A**), oder bzw. und
- eine eine bi-direktionale Kommunikation basierend auf den gesamten MPEG-4 Funktionalitäten durchgeführt werden kann, ohne daß aufwendige zusätzliche Anpassungen der MPEG-4 Daten an die Formate des Kommunikationsstandards erforderlich wären. Ermöglicht wird dies durch konsequente Ausnutzung der von dem Multimediakommunikationsstandard H.324 bereitgestellten Mechanismen (**Konzept B**).

Weiterhin werden beim Fähigkeiten-Austausch und beim Öffnen eines Übertragungskanals die gleichen Datenstrukturen verwendet, die den zu übertragenden Datenstrom-Typen, die verwendeten Kodier-Werkzeuge und deren Parameter wie z.B. die Datenkapazität kennzeichnen.

Durch die Verwendung von Datenpaketen konstanter Länge (bei **Konzept A**) bzw. die Ausnutzung der Rahmenstruktur des in H.324 verankerten Multiplex-Standards H.223 (bei **Konzept B**) wird die Fehlerrobustheit erhöht. Die Aufsynchronisation in den Datenstrom nach einem Fehler ist einfach möglich. Eine Kapselung oder auch die Zusammenführung unterschiedlicher Systeme, z. B. Kombination von H.324 Plattform und MPEG-4 Plattform, ist einfach durchführbar.

### Zeichnungen

Anhand der weiteren Zeichnungen wird die Erfindung näher erläutert. Es zeigen:
- Figur 2a und 2b Blockschaltbilder von MPEG-4 Multimedia Systemen basierend auf einem H.324 Terminal,
- Figur 3 den Aufbau eines Flex-Mux Protokolls im Simple Mode mit konstanter Länge,
- Figur 4 den Aufbau eines Flex-Mux Protokolls im Mux Mode mit konstanter Länge,
- Figur 5 einen Adaption-Layer Rahmen gemäß ITU H.223,
- Figur 6 die Verschachtelung der Daten der logischen ITU-Kanäle,
- Figur 7 das Header Format,
- Figur 8 ein Beispiel für einen Multiplex Entry Descriptor,
- Figur 9 die Einbindung von Paketen konstanter Länge in die ITU-Adaption-Layer variabler Länge.

### Beschreibung von Ausführungsbeispielen

Bevor das erfindungsgemäße Verfahren im Detail beschrieben wird, werden zum besseren Verständnis die verwendeten Standards kurz spezifiziert:
Der Standard ITU-H.324 spezifiziert ein Terminal, welches aus einem Video-Codec gemäß H.261/H.263, einem Audio-Codec gemäß G. 723, einem Multiplexer gemäß H.223 und einem Kontroll-Protokoll gemäß H.245 besteht. Der Aufbau und das Zusammenfügen der einzelnen Komponenten ist in diesem Standard beschrieben.

Der ITU-H.223 Standard spezifiziert ein paketorientiertes Multiplex-Protokoll für Multimedia-Kommunikation mit niedrigen Bitraten. Es wird für die Übertragung niedriger Bitraten zwischen zwei Multimedia-Terminals oder einem Terminal und einer Multi-Point-Einheit eingesetzt. Das Protokoll ermöglicht die Übertragung einer beliebigen Kombination von Audio-, Video- und Dateninformationen über einen einzelnen Kommunikationskanal. Das Protokoll zeichnet sich durch "Low-Delay" und niedrigem Overhead aus. Die notwendigen Protokoll-Prozeduren zur Implementierung des Multiplex-Protokolls werden im H.245 Standard spezifiziert.

Der Standard ITU-H.245 "Control Protocol for Multimedia Communication" spezifiziert die Syntax und Semantik von Terminal-Informationen und Nachrichten sowie die Prozeduren zum Kommunikationsaufbau. Die Nachrichten ermöglichen den Austausch von Terminal-Fähigkeiten/Capabilities, z. B. Terminal A signalisiert Terminal B, daß es Video-Daten decodieren kann und welche Verfahren es unterstützt.

Weiterhin ist ein Protokoll spezifiziert, was die zuverlässige Übertragung von audiovisuellen Daten mittels einer Acknowledge Nachricht erlaubt (Terminal A signalisiert Terminal B den korrekten Empfang des Datenpakets).

Der Standard ITU-H.263/H.261 Standard spezifiziert die Codierung von komprimierten Videodaten für Kanäle niedriger Bitraten.

Der G.723.1 Standard spezifiziert die Decodierung von komprimierten Audiodaten für Kanäle niedriger Bitraten.

Für die Übertragung von MPEG-4 Daten mittels des H.245 Standards sind folgende Schritte erforderlich:
**1.** Zunächst muß ein Austausch der Fähigkeiten (Capability Exchange) der kommunizierenden Terminals stattfinden, um die gegenseitige Kommunikation zu ermöglichen. Die Datenübertragung erfolgt in dem dafür vorgesehenen logischen Kanal 0 entsprechend H.245.
**2.** Des weiteren ist es erforderlich, die MPEG-4 Dekoder zu konfigurieren. Die dazu notwendigen MPEG-4 spezifischen Informationen wie der Initial Object Descriptor werden entweder mittels H.245 insbesondere dem logischen Kanal 0 oder über einen separaten logischen ITU-Kanal übertragen, insbesondere einem logischen Kanal ungleich 0 entsprechend dem ITU-H.223 Standard.
**3.** Anschließend müssen mittels des H.245 Standards die einzelnen, logischen Kanäle zur Übertragung der audiovisuellen Datenströme geöffnet werden.

### zu 1.: Austausch der Fähigkeiten (Capability Exchange)

Für den Capability Exchange ist es ausreichend, eine MPEG-4 Capability innerhalb H.245 zu definieren, die wie folgt aussehen kann: 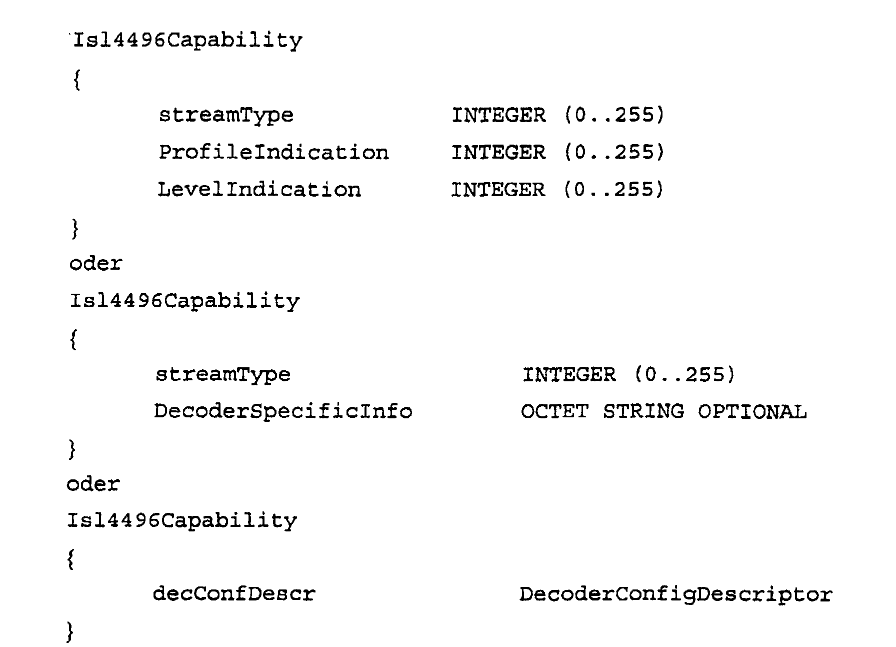 Die einzelnen Felder der obigen Datenstrukturen werden in den MPEG-4 Dokumenten (ISO/IEC 14496) näher erläutert. Der Vorteil dieser Capability Definition begründet sich in dem geringen Daten-Overhead und einem Verweis auf die Spezifikation innerhalb des MPEG-4 Standards und damit die Vermeidung eines Overheads an zusätzlichen Definitionen im H.245-Standard. Der streamType definiert den Typen (d.h. den Inhalt) des Datenstroms, der Profile Indikator definiert die Dekodier-Werkzeuge und der Level die Parameter dieser Dekodierwerkzeuge. Innerhalb MPEG-4 sind unter anderem diese Parameter enthalten mit Ausnahme der Level Indication, die noch zu spezifizieren ist von MPEG.

Die isl4496Capability dient auch dazu, bei Konzept B mittels des "Data Type" Feldes beim Öffnen eines logischen Kanals mit der H.245 Funktion OpenLogicalChannel den in diesem Kanal übertragenen MPEG-4 Daten-Typen anzuzeigen.

### zu 2.: Konfiguration der Dekoder

Nachdem mittels des Capability Exchange die Terminalfähigkeiten definiert sind, wird die Konfiguration der Dekoder durch die Übertragung der Initial Object Descriptoren bzw. der Object Descriptoren durchgeführt. Dieses geschieht entweder mittels eines request/confirm Kommandos nach H.245, innerhalb dessen die Initial Object Descriptoren ausgetauscht werden oder durch das Öffnen eines neuen logischen ITU-Kanals, der nur den Initial Object Descriptor oder den SL-packetierten Object Descriptor Strom enthält.

### zu 3.: Öffnen der logischen Kanäle und Datenübertragung

Nach der Konfiguration werden die einzelnen ITU-Kanäle geöffnet. Allgemein gilt:

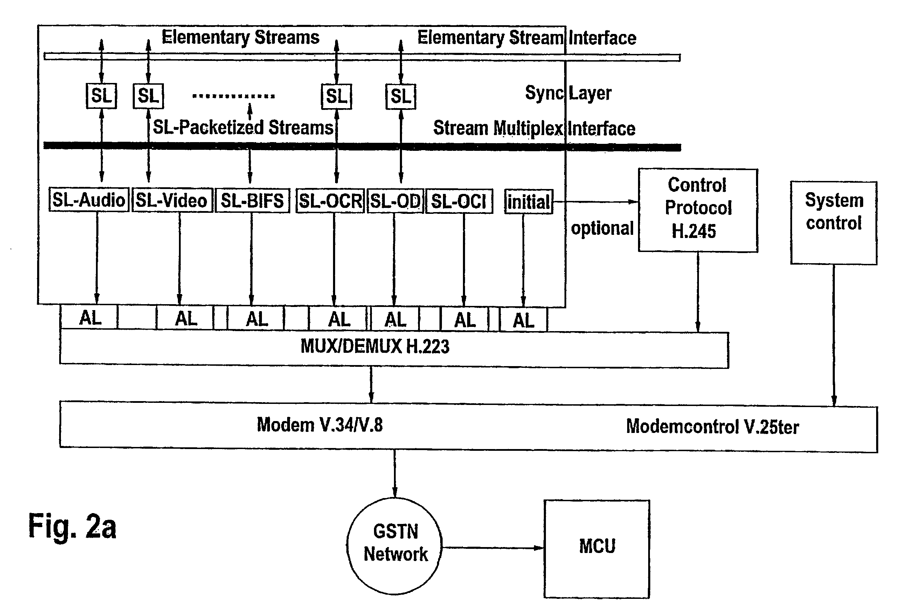

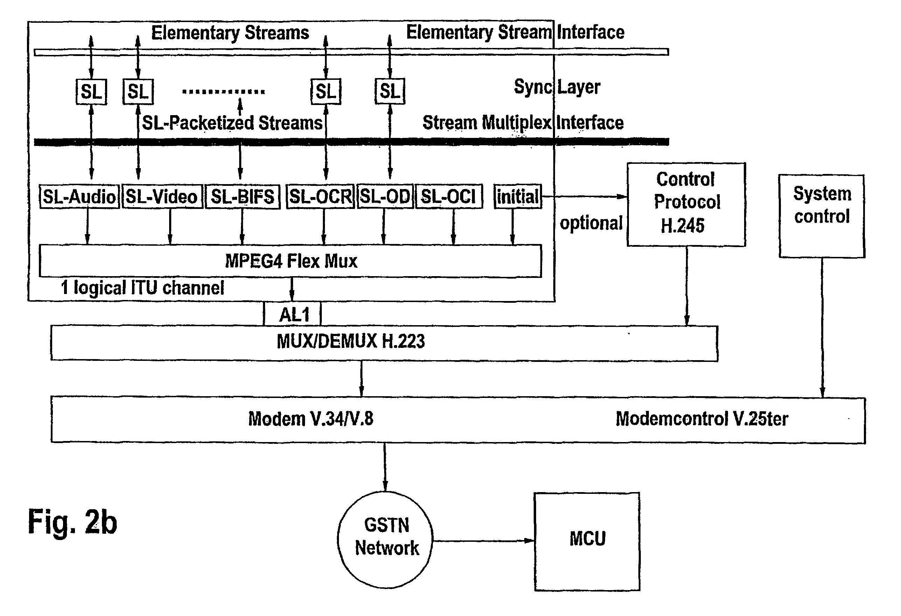

Die audiovisuellen kodierten Informationen, insbesondere gemäß MPEG-4, werden zu separaten Datenströmen aufbereitet. Ein Encoder, der einen MPEG-4 konformen Datenstom generiert, liefert an seinem Ausgang bereits mehrere dieser separaten Datenströme, insbesondere SL (Synchronisation Layer)-paketierte Datenströme. In Figur 2a und Figur 2b sind die Elementardatenströme (El. Streams) am "Elementary Stream Interface" der Sync(Synchronisation)-Layer dargestellt. Hierbei ist zu beachten, daß der Header der SL-Pakete auch zu "NULL"konfiguriert - also weggelassen - werden kann. Innerhalb dieses "Sync Layer" erfolgt die Paketierung der Elementardatenströme, die dann am "Stream Multiplex Interface" für die Weiterverarbeitung abgreifbar sind.

Gemäß **Konzept B** geschieht das Öffnen eines logischen Kanals mit der in H.245 definierten OpenLogicalChannel Message. Das "portNumber"-Feld dient beim Öffnen des jeweiligen logischen Kanals zur Signalisierung der zugeordneten Elementardatenstrom-Identifikation (ES_ID), mittels derer die Datenströme MPEG-4-seitig referenziert werden. Mit dem "streamType"-Feld, dem hier der Wert einer Isl4496Capability zugewiesen wird (es können also die gleichen Datenstrukturen wie beim Cpability Exchange verwendet werden), wird dabei jeweils explizit der Inhalt eines logischen Kanals (d.h. der MPEG-4-Objekttyp) angegeben. Bei der eigentlichen - dann folgenden - Datenübertragung wird bei **Konzept B** jeder einzelne SL-paketierte MPEG-4 Datenstrom am "Stream Multiplex Interface" abgegriffen und in einem logischen ITU-Kanal übertragen. Die SL-paketierten MPEG-4 Datenströme werden hierzu vom H.223 AdaptationLayer als AL-SDU Pakete weiterverarbeitet und mittels des H.223 Standards gemultiplext (Ausführungsbeispiel gemäß Fig. 2a). Diese Übernahme des MPEG-4 Framing der Daten in ein Framing gemäß H.223 (SL-PDU := AL-SDU) erhöht die Fehlerrobustheit und erlaubt eine einfache Resynchronisation, falls ein Pakets fehlerhaft übertragen wurde. Zudem wird hierdurch eine ansonsten zusätzlich notwendige Adaption des MPEG-4 Datenformats an das Format des Multiplexers vermieden. Das Konzept B ermöglicht das (spätere) dynamische Hinzufügen weiterer MPEG-4 Datenstroms.

Für die Umsetzung von **Konzept A** werden die einzelnen Datenströme zu insgesamt nur einem Datenstrom mittels des MPEG-4 FlexMux gemultiplext und in insgesamt einem logischen ITU-Kanal übertragen (Ausführungsbeispiel gemäß Fig. 2b). Für diese Art der Übertragung von MPEG-4 Datenströmen mittels des FlexMux werden zusätzliche Descriptoren definiert, die den Verbindungsaufbau ermöglichen. Nur mit diesen ist die Erkennung der einzelnen MPEG-4 Datenströme möglich. Diese MPEG-4-spezifischen Datenströme werden mittels des MPEG-4 Flexmux Tools gemultiplext. Hierbei wird die Verwendung von Paketen konstanter Länge definiert, wodurch die Fehlerrobustheit erhöht wird. Die Aufsynchronisation in den Datenstrom nach einem Fehler ist so möglich.

Nachfolgend wird das **Konzept A** im Detail beschrieben.

Wie Figur 2b zeigt, können folgende logischen MPEG-4-Objekte (SL-paketierte Datenströme) mittels des MPEG-4 FlexMux-Tools in einen Übertragungsrahmen gemultiplext und in einem logischen ITU-Kanal AL1 übertragen werden:
SL-Audio,
SL-Video,
SL-OCR (Object Clock Reference),
SL-OD (Object Descriptor),
SL-OCI (Object Content Information).

In einer leichten Abwandlung von Konzept A ist es auch möglich, Daten des ausschließlich gleichen Typs (also z.B. entweder nur SL-Audio oder nur SL-Video) in einen logischen Kanal mit Hilfe des FlexMux-Tools zu multiplexen, d.h. die Gesamtheit der MPEG-4-Datenströme wiederum in mehreren (allerdings wenigeren als bei Konzept B) logischen ITU-Kanälen zu übertragen. Dieses würde u.U. eine einfachere Trennung und Dekodierung der gemultiplexten Daten im Empfänger ermöglichen. Im folgenden wird jedoch wiederum das ursprüngliche **Konzept A**, also das Multiplexing aller MPEG-Datenströme in einen logischen ITU-Kanal mittels des FlexMux-Tools betrachtet.

Das Konzept A ermöglicht (ebenso wie Konzept B) die Übertragung mehrerer MPEG-4-Datenströme des gleichen Typs, wie z.B. die Übertragung mehrerer Audioströme für einen bild-begleitenden Ton in unterschiedlichen Sprachen.

Für das Verfahren gemäß **Konzept A** ist es notwendig, **MUXCODETABLE_Entry** während der Initialisierungsphase zu übertragen, um den MPEG-4 FlexMux zu konfigurieren.

Letztendlich muß dem MPEG-4 Dekoder die vorgenommene Zuordnung der einzelnen ES-Ströme zu den zu multiplexenden Daten mitgeteilt werden. Dies wird mittels einer **Channel Map Table** (oder auch Stream Map Table genannt) erreicht.

Diese beiden Informationen sind neben den Objekt Deskriptoren für die Dekodierung notwendig.

Um die zusätzlichen Informationen **MUXCODETABLE_Entry** und **Channel Map Table** in den Initial Object Descriptor einzufügen, ist die Definition neuer Descriptoren notwendig. Diese werden in Form von Extension Descriptors in den Initial Object Descriptor eingefügt.

Class Channel Map Table Descriptor: bit(8) tag= to be defined 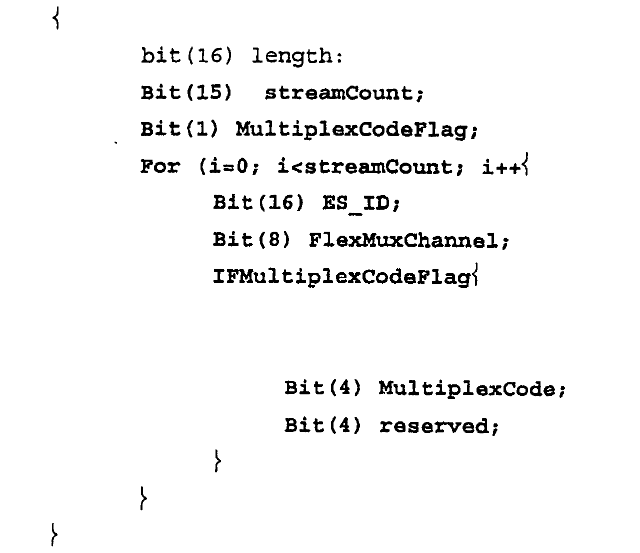 Der fettgedruckte Teil zeigt den hier neu definierten Descriptor.

Ähnlich kann auch der Aufbau eines MuxCodeTableEntryDesccriptors erfolgen:

Class MuxCodeTableEntryDescriptors: bit(8) tag= to be defined

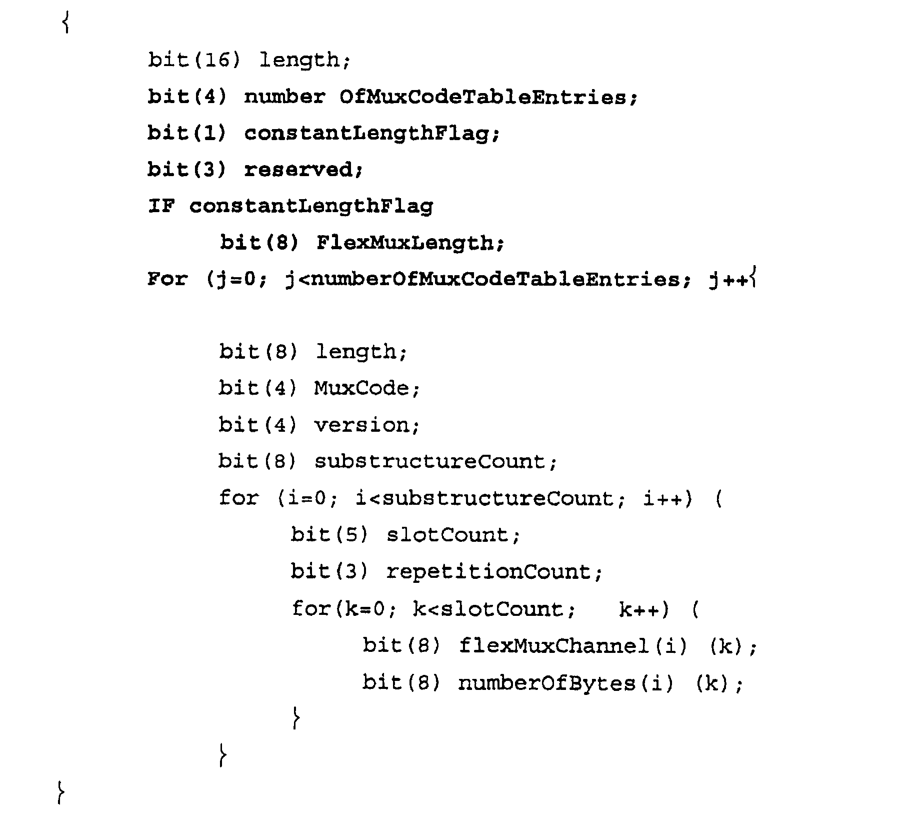

Der fettgedruckte Teil zeigt den hier neu definierten Descriptor. Das Datenfeld **numberOfMuxCodeTableEntries** ermöglicht die Übertragung der maximal 16 MuxCodeTableEntries. Mittels des **constantLengthFlag** und dem Feld **FlexMuxLenth** wird dem Empfänger signalisiert, daß die FlexMux-Pakete mit konstanter Länge mit der Paketgröße **FlexMuxLenth + 2** übertragen werden.

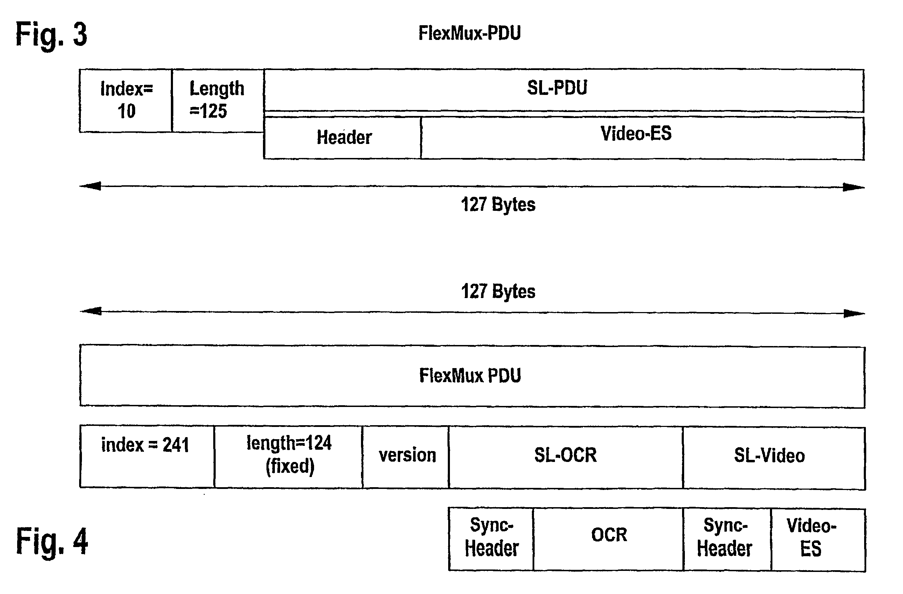

Die in MPEG-4 definierten FlexMux-Pakete werden zum einen in dem Simple Mode gemäß Fig. 3 und zum anderen in dem MuxCode gemäß Fig. 4 übertragen.

Durch Verwendung von Paketen konstanter, ungerader Länge, hier 127 Bytes, können die oberen 7 Bits des Length Felds zur Synchronisation genutzt werden. Dieses erhöht die Fehlerrobustheit und erlaubt eine Resynchronisation, falls ein Längenfeld eines Pakets fehlerhaft ist.

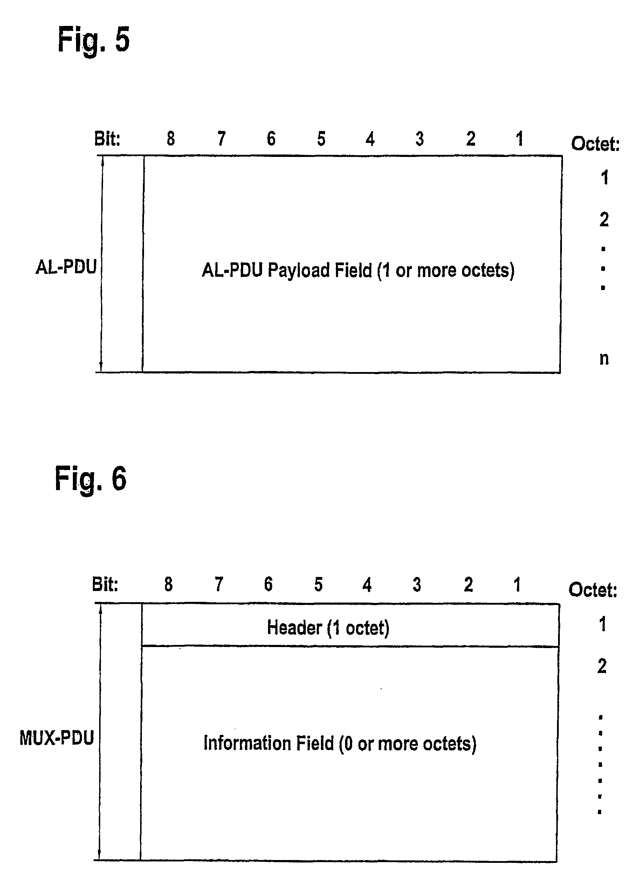

Diese FlexMux - Pakete müssen nun in einen ITU-Rahmen eingebunden werden. In Figur 5 ist ein Adaptation Layer (AL)-Rahmen gemäß ITU-H.223 gezeigt, mit einem AL-PDU (Protocol Data Unit) Payload Field. Aufgrund der variablen Länge eines FlexMux Pakets wäre das Auffinden eines neuen FlexMux Pakets nach einem Fehler im Längenfeld nicht mehr möglich. Dieses ist besonders schädlich, wenn mehrere MPEG-4 Elementarströme (z. B. BIFS, OD, und Video) in einem ITU Kanal übertragen werden.
Durch Verwendung konstanter Längen innerhalb der MPEG-4 FlexMux Pakete, nach der Erfindung, ist dies nun wiederum möglich.

Die einzelnen AL-PDU Pakete variabler Länge werden nun mittels des Multiplexers verpackt.
Der Aufbau des Multiplex Layer und die prinzipielle Einbindung des MPEG-4 FlexMux Datenstroms wird kurz erläutert.

Eine MUX Protocol Data Unit (MUX-PDU) besteht aus einem Header und einem Information Field, indem die Daten der einzelnen logischen ITU Kanäle verschachtelt sind. Figur 6 zeigt den Aufbau.

Der Header besteht aus einzelnen Feldern, die in Figur 1 gezeigt sind.

Der 4 Bit große Multiplex Code zeigt auf einen über H.245 übertragenen MultiplexEntry, wovon maximal 15 verschiedene definiert werden können.

Das Header Error Control Feld ist ein 3 Bit großes CRC Feld, welches eine Fehler-Erkennung im Header zuläßt.

Das 1-Bit Packet Marker Feld markiert das Ende einer MUX-SDU eines segmetierten logischen Kanals.

Das in Figur 6 gezeigte Informations-Feld wird mittels der in H.245 übertragenen MultiplexTable konfiguriert.

Das Informations-Feld kann mit einem Closing Flag jederzeit an einer Oktett-Grenze abgeschlossen werden, jedoch darf eine MUX-SDU von einem nicht segmentierbaren Kanal nicht unterbrochen werden.

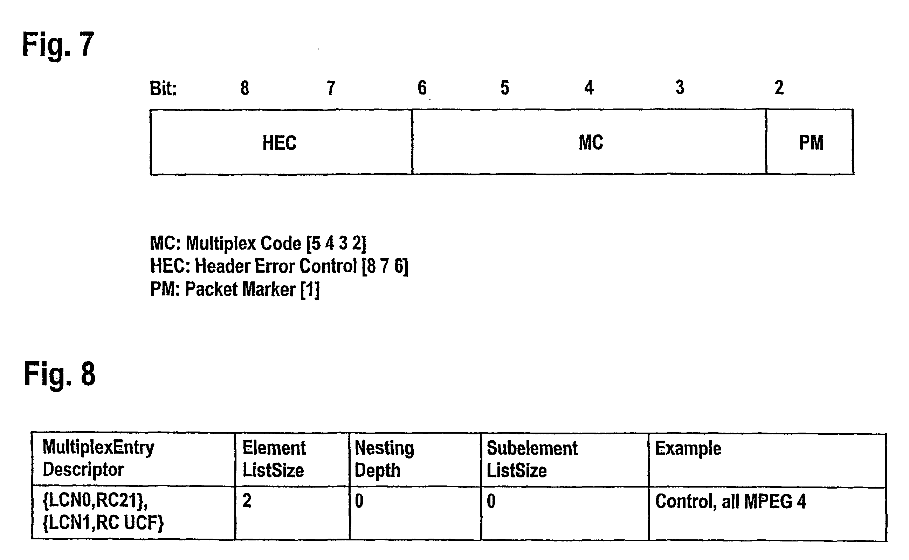

Der MultiplexEntryDescriptor konfiguriert den H.223 Multiplexer und wird in der Initialisierungsphase übertragen (Figur 8).

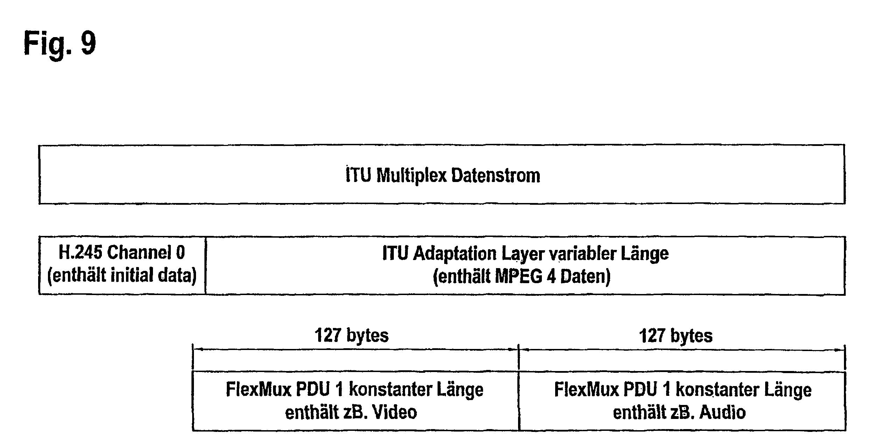

In dieser Figur bedeutet LCN: LogicalChannelNumber, RC: RepeatCount, UCF:UntilClosingFlag.
Der Vorteil wird in der Figur 9 deutlich:
wenn in einem ITU-Kanal mehrere MPEG-Daten übertragen werden und MPEG-4 Pakete variabler Länge benutzt werden, dann sind alle folgenden FlexMuxPakete nicht mehr decodierbar. Die geschickte Verwendung des Längenfelds als ein Synchronisationsmarker erlaubt die Aufsynchronisation des Empfängers.

Das sendende Terminal signalisiert dem empfangenden Terminal die Paketlänge mittels des hier definierten **MuxCodeTableEntryDescriptors,** der durch ein Flag gekennzeichnet ist, welches die Verwendung von FlexMux Paketen konstanter Länge signalisiert und weiterhin ein Feld enthält, welches die zu verwendende Länge festlegt. Hierdurch ist eine große Flexibilität verbunden mit einer großen Fehlerrobustheit gewährleistet.

Die Erfindung kann natürlich nicht nur für MPEG-4 Daten verwendet werden, sondern auch für andere audiovisuelle codierte Information, die in einen standardisierten Übertragungsrahmen einzubinden ist und deren Dekodierung einfach und fehlerrobust erfolgen soll.

Das vorgestellte Verfahren kann natürlich in senderseitigen und empfangsseitigen Endgeräten realisiert werden. Für die senderseitige Einbindung müssen entsprechende Mittel zur Aufbereitung bzw. zur Anlieferung von audiovisueller codierter Information vorgesehen sein sowie entsprechende Mittel zum Multiplexen der Datenströme, zum Austausch der Fähigkeiten und zur Signalisierung. Für die empfangsseitige Auswertung sind Mittel zur Zerlegung der gemultiplexten Datenkanäle sowie Mittel zum Austausch der Fähigkeiten und deren Auswertung und zur Auswertung der Signalisierung notwendig. Da üblicherweise im Dialogverkehr gearbeitet wird, sind Teilnehmerendgeräte sowohl für den Sende- als auch für den Empfangsbetrieb ausgerüstet.

## Patentansprüche

1. Verfahren zur Einbindung von audiovisueller codierter Information in einen vorgegebenen rahmenstrukturierten Übertragungsstandard mit folgenden Schritten:
- die audiovisuelle codierte Information wird zu separaten Datenströmen aufbereitet, beziehungsweise wird in Form von separaten Datenströmen angeliefert,
- die einzelnen Datenströme werden in einen beziehungsweise mehrere Datenkanal/-kanäle des rahmenstrukturierten Übertragungsstandards gemultiplext, **dadurch gekennzeichnet, dass** die Fähigkeiten, d. h. welche Art von Daten codiert beziehungsweise decodiert werden können und welche Verfahren zur Codierung beziehungsweise Decodierung unterstützt werden, der miteinander kommunizierenden Endgeräte nach dem Aufbau einer Verbindung ausgetauscht werden und dass zur Signalisierung Datenstrukturen eines Kodierstandards verwendet werden, die Angaben über den verwendeten Datentyp, das zu benutzende Decodierwerkzeug und die Kodierungsparameter wie z. B. die Datenkapazität enthalten.

2. Verfahren nach Anspruch 1, **dadurch gekennzeichnet, dass** die Datenstrukturen, die beim Austausch der Fähigkeiten und beim Öffnen eines Übertragungskanals verwendet werden, gleich gewählt sind.

3. Verfahren nach Anspruch 1 oder 2, **dadurch gekennzeichnet, dass** beispielsweise für objektbasierte audiovisuell codierte Information mit geringer Objektanzahl die entsprechenden Datenströme mittels eines Multiplexers, insbesondere eines Multiplexers nach dem H.223 Standard, paketiert werden und in einzelnen Übertragungskanälen, insbesondere ITU-Kanälen entsprechend dem H.245 Standard, übertragen werden.

4. Verfahren nach Anspruch 3, **dadurch gekennzeichnet, daß** zur Zuordnung der einzelnen Pakete innerhalb der ihnen zugeordneten Übertragungskanälen, ein Datenfeld ("portNumber"- Feld) dient, das bei einer MPEG-4 Übertragung eine Identifikation der einzelnen Elementar-Datenströme (ES-ID) enthält.

5. Verfahren nach Anspruch 3, **dadurch gekennzeichnet, daß** von dem Multiplex-Verfahren das Datenformat der MPEG-4-Ausgangsdatenströme (SL-PDUs) direkt übernommen wird, so daß keine weitere Umformatierung notwendig wird.

6. Verfahren nach Anspruch 3, **dadurch gekennzeichnet, daß** Objektdescriptoren, insbesondere der "Initial Object Descriptor" nach MPEG-4, für audiovisuelle codierte Informationen in einem separaten Kanal, insbesondere einem logischen Kanal ungleich 0 entsprechend dem ITU- H.223 Standard, untergebracht werden.

7. Verfahren nach Anspruch 3, **dadurch gekennzeichnet, daß** für objektbasierte audiovisuell codierte Information - beispielsweise bei großer Objektanzahl - die entsprechenden Datenströme zu einem gemeinsamen Datenstrom gemultiplext werden und in einem Übertragungskanal, insbesondere in einem ITU-Kanal, übertragen werden.

8. Verfahren nach einem der Ansprüche 1, 2 oder 7, **dadurch gekennzeichnet, daß** neben den gemultiplexten Datenströmen im Übertragungsrahmen des rahmenstrukturierten Übertragungsstandards eine Signalisierungsinformation untergebracht wird, die darauf hinweist, daß gemultiplexte Informationspakete konstanter Länge übertragen werden, aufgrund derer eine Synchronisation, insbesondere bei fehlerhaften Datenpaketen, duchführbar ist.

9. Verfahren nach einem der Anspruch 1, 2 oder 7, **dadurch gekennzeichnet, daß** Objektdescriptoren, insbesondere der "Initial Object Descriptor" nach MPEG-4, für audiovisuelle codierte Informationen in einem zusätzlichen Kanal, insbesondere dem logischen Kanal 0 entsprechend dem ITU-H.245 Standard, untergebracht werden.

10. Verfahren nach einem der Ansprüche 1, 2, 7 oder 8, **dadurch gekennzeichnet, daß** Zuordnungsdaten zwischen den separaten Datenströmen, insbesondere SL paketierten MPEG-4 Elementardatenströmen und den gemultiplexten Daten in dem zusätzlichen Kanal, insbesondere dem logischen Kanal 0 entsprechend dem ITU- H.245 Standard, untergebracht werden.

11. Verfahren nach einem der Ansprüche 1, 2, 7, 8 oder 9, **dadurch gekennzeichnet, daß** für die Signalisierungsinformation Datenfelder vorgesehen werden, welche zum einen die konstante Länge und die Paketgröße der gemultiplexten Informationspakete kennzeichnen.

12. Verfahren nach einem der Ansprüche 1, 2, oder 7 - 10, **dadurch gekennzeichnet, daß** als audiovisuelle codierte Information MPEG-4 Daten verwendet werden, die zu Flex-Mux-Paketen konstanter Länge aufbereitet werden, und daß diese Flex-Mux-Pakete konstanter Länge in einen Übertragungsrahmen gemultiplext werden, die eine Übertragung gemäß dem ITU-Standard H.324 ermöglicht.

13. Verfahren nach einem der Ansprüche 1 bis 12, **dadurch gekennzeichnet, daß** innerhalb der "Adaptation Layer" variabler Länge gemäß ITU-Standard H.324 mehrere MPEG-4 Daten in Datenpaketen konstanter Länge untergebracht werden, wobei im Anfangsbereich dieser Datenpakete jeweils ein Längenfeld vorgesehen ist, welches als Synchronisationskennung, insbesondere zur Aufsynchronisation eines Empfängers, verwendbar ist.

14. Endgerät zur senderseitigen Einbindung von audiovisueller codierter Information in einen vorgegebenen rahmenstrukturierten Übertragungsstandard mit folgenden Merkmalen:
- Mitteln zur Aufbereitung der audiovisuellen codierten Information zu separaten Datenströmen an das Endgerät beziehungsweise zur Anlieferung in Form von separaten Datenströmen an das Engerät,
- Mitteln zum Multiplexen der einzelnen Datenströme in einen beziehungsweise mehrere Datenkanal/-kanäle des rahmenstrukturierten Übertragungsstandards, **gekennzeichnet durch** Mittel zum Austausch der Fähigkeiten, d. h. welche Art von Daten codiert beziehungsweise decodiert werden können und welche Verfahren zur Codierung beziehungsweise Decodierung unterstützt werden, mit weiteren Endgeräten insbesondere nach dem Aufbau einer Verbindung,
- Mittel zur Signalisierung unter Verwendung von Datenstrukturen, die Angabe über den verwendeten Datentyp, das zu benutzende Decodierungswerkzeug und die Kodierungsparameter wie z. B. Datenkapazität enthalten.

15. Endgerät zur empfangsseitigen Auswertung von audiovisueller codierter Information in einem vorgegebenen rahmenstrukturierten Übertragungsstandard mit folgenden Merkmalen:
- Mitteln zur Zerlegung eines beziehungsweise mehrerer gemultiplexter rahmenstrukturierter Datenkanäle eines Übertragungsstandards in einzelne audiovisuelle Datenströme, **gekennzeichnet durch** Mittel zum Austausch der Fähigkeiten, d. h. welche Art von Daten codiert beziehungsweise decodiert werden können und welche Verfahren zur Codierung beziehungsweise Decodierung unterstützt werden, mit weiteren Endgeräten insbesondere nach dem Aufbau einer Verbindung,
- Mittel zur Signalisierung unter Verwendung von Datenstrukturen, die Angabe über den verwendeten Datentyp, das zu benutzende Decodierwerkzeug und die Datenkapazität enthalten.

## Claims

1. Method for incorporating audio-visual coded information into a prescribed frame-structured transmission standard, having the following steps:
- the audio-visual coded information is conditioned to form separate data streams, or is delivered in the form of separate data streams,
- the individual data streams are multiplexed into one or more data channel/channels of the frame-structured transmission standard, **characterized in that** the capabilities, i.e. which type of data can be coded and decoded and which methods are supported for coding and decoding, of the intercommunicating terminals are exchanged after a connection has been set up, and **in that** signalling is effected using data structures of a coding standard which contain details about the data type used, the decoding tool to be used and the coding parameters, such as the data capacity.

2. Method according to Claim 1, **characterized in that** the data structures used for exchanging the capabilities and for opening a transmission channel are chosen to be the same.

3. Method according to Claim 1 or 2, **characterized in that**, for object-based audio-visually coded information having a small number of objects, for example, the appropriate data streams are packetized using a multiplexer, in particular a multiplexer based on the H.223 standard, and are transmitted in individual transmission channels, in particular ITU channels based on the H.245 standard.

4. Method according to Claim 3, **characterized in that** the individual packets are allocated within their associated transmission channels using a data field ("portNumber" field) which contains an identification for the individual elementary data streams (ES-ID) for an MPEG-4 transmission.

5. Method according to Claim 3, **characterized in that** the multiplex method transfers the data format of the MPEG-4 output data streams (SL-PDUs) directly, so that no further reformatting becomes necessary.

6. Method according to Claim 3, **characterized in that** object descriptors, in particular the "initial object descriptor" based on MPEG-4, for audio-visual coded information are accommodated in a separate channel, in particular in a logic channel not equal to zero in accordance with the ITU H.223 standard.

7. Method according to Claim 3, **characterized in that**, for object-based audio-visually coded information - for example with a large number of objects - the appropriate data streams are multiplexed to form a common data stream and are transmitted in one transmission channel, in particular in an ITU channel.

8. Method according to one of Claims 1, 2 or 7, **characterized in that**, besides the multiplexed data streams in the transmission frame of the frame-structured transmission standard, signalling information is accommodated which points to the fact that multiplexed information packets of constant length are being transmitted which can be used to perform synchronization, in particular in the case of erroneous data packets.

9. Method according to one of Claims 1, 2 or 7, **characterized in that** object descriptors, in particular the "initial object descriptor" based on MPEG-4, for audio-visual coded information are accommodated in an additional channel, in particular the logic channel 0 in accordance with the ITU H.245 standard.

10. Method according to one of Claims 1, 2, 7 or 8, **characterized in that** allocation data are accommodated between the separate data streams, in particular SL packetized MPEG-4 elementary data streams, and the multiplexed data in the additional channel, in particular the logic channel 0 in accordance with the ITU H.245 standard.

11. Method according to one of Claims 1, 2, 7, 8 or 9, **characterized in that**, for the signalling information, data fields are provided which firstly identify the constant length and the packet size of the multiplexed information packets.

12. Method according to one of Claims 1, 2, or 7 - 10, **characterized in that** the audio-visual coded information used is MPEG-4 data which are conditioned to form Flex-Mux packets of constant length, and **in that** these Flex-Mux packets of constant length are mulitplexed into a transmission frame which permits transmission based on ITU Standard H.324.

13. Method according to one of Claims 1 to 12, **characterized in that**, within the "adaptation layer" of variable length based on ITU Standard H.324, a plurality of MPEG-4 data are accommodated in data packets of constant length, with the start area of these data packets containing a respective length field which can be used as a synchronization identifier, in particular for synchronizing a receiver.

14. Terminal for the transmission-end incorporation of audio-visual coded information into a prescribed frame-structured transmission standard, having the following features:
- means for conditioning the audio-visual coded information to form separate data streams to the terminal or for delivery in the form of separate data streams to the terminal,
- means for multiplexing the individual data streams into one or more data channel/channels of the frame-structured transmission standard, **characterized by** means for exchanging capabilities, i.e. which type of data can be coded and decoded and which methods are supported for coding and decoding, with other terminals, in particular after a connection has been set up,
- means for signalling using data structures which contain details about the data type used, the decoding tool to be used and the coding parameters, such as data capacity.

15. Terminal for the reception-end evaluation of audio-visual coded information in a prescribed frame-structured transmission standard, having the following features:
- means for resolving one or more multiplexed frame-structured data channels of a transmission standard into individual audio-visual data streams, **characterized by** means for exchanging capabilities, i.e. which type of data can be coded and decoded and which methods are supported for coding and decoding, with other terminals, in particular after a connection has been set up,
- means for signalling using data structures which contain details about the data type used, the decoding tool to be used and the data capacity.

## Revendications

1. Procédé d'intégration d'informations audiovisuelles codées dans une norme de transmission à trame structurée, prédéterminée comprenant les étapes suivantes :
- on prépare une information audiovisuelle codée pour un flux de données séparé ou sous la forme de flux de données séparés,
- les différents de données sont multiplexés dans un plusieurs canaux de données de la norme de transmission à trame structurée,
- **caractérisé en ce qu'**
- on échange les possibilités des terminaux communiquant après l'établissement d'une liaison (c'est-à-dire quels que soient le type de données à coder ou à décoder et les procédés de codage ou de décodage supportés) et,
- pour signaler les structures de données, on utilise une norme de codage qui contient des indications relatives au type de données utilisé par l'outil de décodage utilisé et les paramètres de codage comme par exemple la capacité de données.

2. Procédé selon la revendication 1,
**caractérisé en ce qu'**
on sélectionne des structures de données utilisées pour l'échange des possibilités et l'ouverture d'un canal de transmission.

3. Procédé selon les revendications 1 ou 2,
**caractérisé en ce que**
par exemple pour une information à codage audiovisuel, base et objet, à faible nombre d'objets, on forme des paquets pour les flux de données correspondants à l'aide d'un multiplexeur notamment d'un multiplexeur travaillant selon la norme H.223 et on transmet par différents canaux de transmission séparés notamment des canaux ITU correspondant à la norme H.245.

4. Procédé selon la revendication 3,
**caractérisé en ce que**
pour attribuer les différents paquets à l'intérieur des canaux de transmission qui leur sont associés, on utilise un champ de données (champ « numéro de port ») qui contient pour une transmission MPEG-4, une identification des différents flux de données élémentaires (ES-ID).

5. Procédé selon la revendication 3,
**caractérisé en ce que**
le procédé multiplex reprend directement le format de données du flux de données de sortie MPEG-4 (SL-PDU) pour ne pas nécessiter d'autres formatages.

6. Procédé selon la revendication 3,
**caractérisé en ce qu'**
on loge les descripteurs objets notamment le descripteur objet initial selon MPEG-4 pour des informations codées audiovisuelles dans un canal séparé notamment un canal logique différent de O selon la norme ITU-H.223.

7. Procédé selon la revendication 3,
**caractérisé en ce que**
pour l'information à codage audiovisuel base et objet (par exemple pour un grand nombre d'objets), on multiplexe les flux de données correspondants pour obtenir un unique flux de données et on les transmet dans un canal de transmission notamment dans un canal ITU.

8. Procédé selon l'une quelconque des revendications 1, 2, 7,
**caractérisé en ce qu'**
à côté des flux de données multiplexés dans une trame de transmission de la norme de transmission à trame structurée, on loge une information de signalisation indiquant que des paquets d'informations multiplexés de longueur constante sont transmis et qu'à partir delà on effectue une synchronisation notamment pour des paquets de données défectueux.

9. Procédé selon l'une quelconque des revendications 1, 2, 7,
**caractérisé en ce que**
les descripteurs objets notamment le descripteur objet initial selon MPEG-4 pour des informations à codage audiovisuel sont intégrés dans un canal supplémentaire notamment un canal logique 0 selon la norme ITU-H.245.

10. Procédé selon l'une quelconque des revendications 1, 2, 7, 8.
**caractérisé en ce que**
des données d'attribution entre les flux de données séparés notamment les flux de données élémentaires MPEG-4 en paquets SL et les données multiplexées sont logées dans le canal supplémentaire notamment dans le canal logique O selon la norme ITU-H.245.

11. Procédé selon l'une quelconque des revendications 1, 2, 7, 8, 9,
**caractérisé en ce que**
des champs de données sont prévus pour l'information de signalisation. ces champs caractérisant la longueur constante et la taille des paquets d'informations multiplexés.

12. Procédé selon l'une quelconque des revendications 1, 1 ou 7-10,
**caractérisé en ce qu'**
on utilise comme informations à codage audiovisuel, des données MPEG-4 qui sont préparées en paquets FlexMux de longueur constante, et ces paquets FlexMux de longueur constante sont multiplexés dans une trame de transmission qui permet une transmission selon la norme ITU-H.324.

13. Procédé selon l'une quelconque des revendications à 12,
**caractérisé en ce qu'**
à l'intérieur de la couche d'adaptation de longueur variable selon la norme ITU-H.324, on loge plusieurs données dans des paquets de données de longueur constante,
et dans la zone initiale de ces paquets de données, on prévoit chaque fois un champ de longueur utilisé comme caractéristique de synchronisation notamment pour synchroniser un récepteur.

14. Terminal pour intégrer des informations à codage audiovisuel du côté de l'émetteur dans une norme de transmission à trame structurée. prédéterminée. ayant les caractéristiques suivantes :
- des moyens pour préparer l'information à codage audiovisuel pour des flux de données séparés vers le terminal ou pour les fournir sous la forme de flux de données séparés vers le terminal.
- des moyens pour multiplexer les différents flux de données dans un ou plusieurs canaux de données de la norme de transmission à trame structurée,
- **caractérisé par**
- des moyens pour échanger des possibilités, c'est-à-dire la nature des données qui peuvent être codées ou décodées et assistant des procédés de codage et de décodage avec d'autres terminaux notamment pour établir une liaison.
- des moyens utilisant des structures de données pour signaler l'indication du type de données utilisé, de l'outil de codage utilisé et des paramètres de codage comme par exemple la capacité de données.

15. Terminal pour l'exploitation en réception d'informations à codage audiovisuel dans une norme de transmission à trame structurée et ayant les caractéristiques suivantes :
- des moyens pour décomposer un ou plusieurs canaux de données à trame structurée, multiplexés d'une norme de transmission en différents flux de données audiovisuels,
**caractérisé par**
- des moyens pour l'échange des possibilités, c'est-à-dire du type de données à coder ou à décoder et les procédés de codage ou de décodage à soutenir, ainsi que d'autres terminaux notamment après l'établissement de la liaison.
- des moyens pour signaler avec indication les structures de données. les types de données utilisés, l'outil de décodage à utiliser et les capacités de données.
